## Europäisches Patentamt

(19) **European Patent Office**

**Office européen des brevets**

(11) Numéro de publication: **0 126 004 B1**

(12) ## FASCICULE DE BREVET EUROPEEN

(45) Date de publication du fascicule du brevet:
28.01.87

(51) Int. Cl.⁴: **C 12 C 11/04**

(21) Numéro de dépôt: **84400971.2**

(22) Date de dépôt: **11.05.84**

(54) **Bière à teneur en alcool réduite et son procédé de préparation.**

(30) Priorité: **11.05.83 FR 8307922**

(43) Date de publication de la demande:
**21.11.84 Bulletin 84/47**

(45) Mention de la délivrance du brevet:
**28.01.87 Bulletin 87/5**

(84) Etats contractants désignés:
**BE CH DE GB IT LI NL SE**

(56) Documents cités:
**FR - A - 2 406 665**
**US - A - 4 346 116**

(73) Titulaire: **Roquette Frères, F-62136 Lestrem (FR)**

(72) Inventeur: **Bussiere, Guy, 64, rue de la Lys, F-59253 La Gorgue (FR)**
Inventeur: **Zimmermann, Marius, 12, rue Donckele, F-59190 Hazebrouck (FR)**
Inventeur: **Huchette, Michel, 63, rue du Maréchal Joffre, F-59660 Merville (FR)**

(74) Mandataire: **Koch, Gustave et al, Cabinet PLASSERAUD 84, rue d'Amsterdam, F-75009 Paris (FR)**

## Description

L'invention a pour objet une bière du genre de celles qui présentent une teneur en alcool réduite par rapport à la teneur normale de 2° à 4,6° et qui sont généralement désignées par les expressions «bières sans alcool», «bières à faible teneur en alcool», «bières appauvries en alcool» ou encore par l'expression de langue anglaise «light beer».

Elle vise également le procédé de fabrication de cette bière.

La production des bières du genre en question a connu, ces dernières années, un développement important dans le cadre notamment de la lutte contre l'ivresse et l'alcoolisme.

Elles sont obtenues de diverses manières dont les principales vont être indiquées ci-après, après un bref rappel des phases fondamentales de la fabrication de la bière; on verra qu'elles présentent toutes des inconvénients importants.

La fabrication de la bière comporte, fondamentalement,

- d'une part, l'opération de brassage dans laquelle les matières premières, c'est-à-dire le malt, et dans la plupart des pays, des matières amylacées, sont hydrolysées en milieu aqueux et sous l'influence des enzymes du malt en sucres simples — essentiellement du maltose — et en dextrines-limite, cette opération de brassage conduisant, après séparation des matières solides, à un liquide appelé le moût,

- d'autre part, le traitement de stérilisation du moût par ébullition concomittant à l'addition de houblon et,

- d'autre part enfin, la fermentation du moût sous l'influence de la levure de bière se traduisant par la métabolisation des sucres simples avec formation d'alcool, de gaz carbonique et de substances aromatiques.

Une autre façon de préparer des boissons avec parfum de bière consiste à utiliser des sirops de froment à dextrose-équivalent ou DE élevé (FR-A-2 406 655).

D'une façon générale, le degré alcoolique de la bière dépend de la proportion de sucres fermentescibles dans le moût soumis à la fermentation et du degré de métabolisation de ces sucres.

Pour abaisser ce degré alcoolique, on a eu recours à l'évaporation de l'alcool, la bière étant soumise à un vide important à l'intérieur d'un évaporateur. Ce procédé est coûteux car il introduit une opération supplémentaire et il donne des bières peu agréables à la dégustation car déséquilibrées du fait de l'élimination de substances aromatiques volatiles.

On a également essayé de réduire de diverses façons le pourcentage de sucres fermentescibles dans le moût.

Dans cet ordre d'idées, on a proposé de modifier les conditions d'hydrolyse du malt et des substances amylacées en remplaçant l'action des enzymes du malt après inhibition de celles-ci par un mélange d'enzymes amylasiques sélectionné de façon telle qu'il conduise à une limitation de la production de sucres simples.

On a également proposé de stopper l'hydrolyse tout simplement avant son aboutissement normal.

Toujours dans cet ordre d'idées, on a proposé de diluer le moût, avant de le soumettre à la fermentation, par des sirops de glucose ou des malto-dextrines sélectionnées pour leur faible teneur en sucres simples fermentescibles.

Dans les trois cas, la présence d'une grande proportion de polysaccharides fait que la bière ainsi traitée donne une impression pâteuse à la dégustation.

Dans un autre ordre d'idées, il a été envisagé de stopper la fermentation, par exemple par un brutal refroidissement, alors que n'est métabolisée qu'une partie des sucres fermentescibles; l'inconvénient de ce procédé est qu'un redémarrage ultérieur de la fermentation ne peut jamais être exclu à coup sûr.

De sérieux progrès ont été réalisés en remplaçant une partie du malt par du sorbitol.

Les résultats enregistrés ne sont cependant pas entièrement satisfaisants en raison notamment du goût sucré conféré à la bière et qui n'est pas toujours souhaité.

Comme on le voit, aucune des solutions proposées par l'art antérieur n'est satisfaisante sur tous les plans.

L'invention a donc pour but, surtout, de remédier aux inconvénients de l'art antérieur et de fournir une bière à teneur réduite en alcool donnant satisfaction au consommateur.

La Société Demanderesse a trouvé que ce but était atteint dès lors que la bière contient un hydrolysat d'amidon hydrogéné dont la composition (exprimée en pourcentage en poids sur la matière sèche) est la suivante:

- teneur en produits de DP 1 (degré de polymérisation) comprise entre 0,1 et 35%, de préférence entre 0,1 et 20%,
- teneur en produits de DP 2 comprise entre 0,1 et 45%, de préférence entre 0,1 et 42%,
- teneur en produits de DP > 20 inférieure à 45%, de préférence inférieure à 40% et, plus préférentiellement encore, inférieure à 30%,
- le complément à 100 étant constitué par les produits de DP 3 à 20.

Il s'ensuit que la bière à teneur réduite en alcool conforme à l'invention est caractérisée par le fait qu'elle comporte une proportion de 0,1 à 2% en poids du susdit hydrolysat d'amidon hydrogéné.

Le procédé de fabrication de la bière à teneur réduite en alcool conforme à l'invention est caractérisé par le fait qu'à un moment quelconque de la fabrication de la bière et, de préférence, au plus tard au moment de l'opération de fermentation et avantageusement avant ou pendant le traitement de stérilisation du moût par ébullition en présence de houblon, on ajoute le susdit hydrolysat d'amidon hydrogéné en une quantité telle que la bière finale en contienne une proportion de 0,1 à 2% en poids.

L'hydrolysat est introduit de préférence sous la forme d'un sirop de 6 à 85% en poids de matières sèches; l'utilisation de l'hydrolysat sous forme de poudre est également possible.

Les hydrolysats d'amidon hydrogénés utilisés dans le cadre de la présente invention peuvent être obtenus par hydrogénation d'hydrolysats d'amidon présentant un DE comris entre 15 et 55, de préférence entre 15 et 50.

Ils présentent de préférence, par ailleurs, des teneurs en produits de DP 1 et DP 2 dont la somme est inférieure à 60%, de telle manière que la bière obtenue n'ait pas un goût sucré trop prononcé (le goût sucré étant principalement apporté par le sorbitol et surtout le maltitol) et qu'elle présente un «corps» et un moëlleux suffisant.

Des hydrolysats d'amidon hydrogénés particulièrement préférés dans le cadre de l'invention, car permettant de conduire à des bières sans alcool d'un goût agréable, présentant un «corps» suffisant sans pour autant donner une impression de «pâteux» à la dégustation, sont ceux répondant au spectre glucidique suivant:

0,5% < produits de DP 1     < 16%
1   % < produits de DP 2     < 35%
0   % ≤ produits de DP > 20 < 20%.

Un des avantages inhérents de l'invention est cependant de pouvoir agir, sans changer les paramètres de base d'une fabrication donnée de bière, sur la saveur sucrée et le «corps» et le moëlleux du produit final, en faisant varier, à l'intérieur des limites générales indiquées, la composition de l'hydrolysat utilisé, ce qui est rendu possible par les diverses techniques d'hydrolyse acide ou acide-enzyme ou enzyme-enzyme de l'amidon.

Pour illustrer les indications qui précèdent, on donne ci-après un certain nombre d'exemples comportant des modes de réalisation avantageux de l'invention.

*Exemple 1*

On prépare une bière à faible teneur en alcool par incorporation, en une quantité représentant 20% de l'extrait sec total (essentiellement du malt), d'un hydrolysat d'amidon hydrogéné A dont la composition est la suivante:

Produits de DP 1               12%
Produits de DP 2                9%
Produits de DP 3               12%
Produits de DP < 20            6%

le DE (dextrose-équivalent) de cet hydrolysat avant hydrogénation ayant été de 34.

Pour obtenir 100 g de moût, il faut 6 g de matière sèche initiale et on utilise donc 4,8 g d'extrait sec de malt et 1,2 g d'extrait sec d'hydrolysat d'amidon hydrogéné A.

Cette bière est comparée à celles provenant de deux essais témoins; le premier témoin est constitué par une bière préparée dans les mêmes conditions que la précédente sans que toutefois 20% de l'extrait sec total soient remplacés par l'hydrolysat A; le deuxième témoin est une bière également préparée dans les mêmes conditions mais dans laquelle la quantité d'extrait sec total est réduite de 20% sans compensation par une quantité équivalente d'hydrolysat.

On indique ci-après les étapes de la fabrication du premier témoin, c'est-à-dire de la bière «pur malt»:

Etape 1 - C'est l'étape de brassage. Un mélange de 210 g de malt et de 850 ml d'eau est chauffé en respectant le programme de température suivant: 30 minutes à 50°C, 30 minutes à 68°C, 30 minutes à 75°C.

Toutes les montées en température se font à la vitesse de 1°C/minute.

Etape 2 - C'est une étape de filtration, effectuée sur filtre papier.

Etape 3 - C'est une étape de lavage. La drèche est lavée avec deux fois 500 ml d'eau chaude à 70 - 75°C.

Etape 4 - Cette étape consiste en la dilution du moût avec de l'eau jusqu'à obtenir 3 litres de solution.

Etape 5 - C'est l'étape de stérilisation en présence de houblon. On porte le moût à ébullition pendant 1 heure 30, l'opération de houblonnage consistant à ajouter 0,6 g de houblon (sous forme de granulés concentrés) par litre de moût après 30 minutes d'ébullition.

Etape 6 - Il s'agit d'une étape de refroidissement rapide (sous eau courante) et de filtration sommaire du moût sur coton pour retenir les particules de houblon et le trouble grossier.

Etape 7 - Au cours de cette étape, on ensemence le moût à l'aide de 4 g de levure pâteuse par litre de moût.

Etape 8 - C'est l'étape de fermentation qui comporte deux stades dont le premier consiste en un maintien de la température à 8°C pendant 6 à 8 jours et dont le deuxième consiste à transvaser le milieu en des flacons hermétiques et à maintenir la température à 0°C pendant 8 à 10 jours.

On obtient finalement environ 2,6 litres de bière.

La fabrication du deuxième témoin se déroule de la même manière, à la seule différence près que la quantité de malt est réduite de 20% et qu'elle n'est pas compensée par la suite par un ajout d'hydrolysat d'amidon hydrogéné.

La préparation de la bière à faible teneur conforme à l'invention se déroule, dans le cas d'un mode de réalisation avantageux, également de la même manière, à la différence près que 20% du malt sont remplacés par une quantité équivalente d'hydrolysat d'amidon hydrogéné A.

Du point de vue pratique, on a donc recours, dans l'étape 1, à une quantité de malt réduite de 20%, c'est-à-dire limitée à 168 g.

Vingt minutes avant la fin de l'ébullition dans l'étape 5, on ajoute 42 g d'hydrolysat A. Par rapport au produit fini, on introduit donc environ 1,6% en poids d'hydrolysat d'amidon hydrogéné A exprimé par rapport à la bière.

Les résultats enregistrés pour les trois bières ainsi fabriquées sont indiqués ci-après.

La bière constituée par le premier témoin présente un degré alcoolique de 2,3°, donc nettement supérieur à la valeur visée qui est de 1,8°. De plus, cette bière est jugée par les dégustateurs comme étant plate et sans corps.

La bière constituée par le deuxième témoin présente un degré alcoolique voisin de 1,8, mais les dégustateurs n'ont pas jugé que cette boisson pouvait être qualifiée de bière.

La bière conforme à l'invention (20% de l'extrait sec total du moût constitué par l'hydrolisat A) présente un degré alcoolique de 1,85 qui est donc très proche de la valeur visée; elle présente un aspect tout à fait normal. Elle a cependant une teneur en gaz carbonique un peu faible, en relation directe avec le très faible taux de fermentescibles (utilisés dans la préparation) et qui peut être corrigé facilement par addition de gaz carbonique au cours du processus industriel. Cette bière a été jugée très satisfaisante du point de vue de ses propriétés gustatives.

*Exemple 2*

On procède d'une manière identique à celle indiquée à l'exemple 1 pour la préparation de la bière conforme à l'invention, à l'exception près que l'hydrolysat hydrogéné A est remplacé par une même quantité en matière sèche d'une maltodextrine dont la composition est la suivante:

| | |
|---|---|
| Produits de DP 1 | 1,5% |
| Produits de DP 2 | 5 % |
| Produits de DP 3 | 6,5% |
| Produits de DP > 20 | 42,5% |

le DE de cette malto-dextrine étant de 16.

La bière produite est légèrement plus colorée que celle du premier exemple utilisant l'hydrolysat d'amidon hydrogéné A. Elle possède un goût plus marqué, difficilement définissable et présente une amertume peu agréable, différente de celle propre au houblon; enfin, elle donne à la dégustation et surtout à la déglutition une impression «épaisse ou pâteuse». Sa teneur en alcool est de 1,91°.

Cet exemple montre bien que même les malto-dextrines ayant un taux de fermentescibles inférieur ou égal à 6,5% ne procurent pas de résultats comparables à ceux que l'on peut obtenir avec les hydrolysats d'amidon hydrogénés mis en oeuvre conformément à l'invention.

*Exemple 3*

On compare les propriétés gustatives de différentes bières obtenues par incorporation directe d'un certain nombre d'hydrolysats d'amidon hydrogénés dans une «bière sans alcool» vendue sous la marque «CELTABIRELL® », fabriquée en France par la S.A.E.D.G.

Les produits hydrogénés ont été introduits en une quantité apportant 1,2 g d'extrait sec pour 100 ml de bière (sauf dans un cas où la proportion était plus faible), ce qui donne des proportions d'hydrolysat dans la bière finie tout à fait comparables à celle obtenue après l'étape de stérilisation de l'exemple 1 dans la fabrication de la bière selon l'invention (malt + 20% d'hydrolysat A).

On a procédé à cinq essais en utilisant des hydrolysats d'amidon hydrogénés différents.

Pour chacun des essais, on identifie ci-après l'hydrolysat utilisé par sa composition.

Essai 1: Mise en oeuvre, à titre de témoin, d'un sirop de sorbitol de composition:

| | |
|---|---|
| Produits de DP 1 | 84 % |
| Produits de DP 2 | 10,5% |
| Produits de DP 3 | 3 % |
| Produits de DP > 20 | 0, |

le DE de cet hydrolysat avant hydrolyse ayant été de 90.

Essai 2: Mise en oeuvre de l'hydrolysat A de l'exemple 1.

Essai 3: Mise en oeuvre de l'hydrolysat A de l'exemple 1 introduit à un taux de 0,8 g d'extrait sec pour 100 ml de bière.

Essai 4: Mise en oeuvre d'un hydrolysat d'amidon hydrogéné C de composition:

| | |
|---|---|
| Produits de DP 1 | 7,0% |
| Produits de DP 2 | 52,5% |
| Produits de DP 3 | 18,0% |
| Produits de DP > 20 | 1,0%, |

le DE de cet hydrolysat avant hydrogénation ayant été de 50.

Essai 5: Mise en oeuvre d'un hydrolysat d'amidon hydrogéné B de composition:

| | |
|---|---|
| Produits de DP 1 | 6,5% |
| Produits de DP 2 | 26,0% |
| Produits de DP 3 | 20,0% |
| Produits de DP > 20 | 7,5%, |

le DE de cet hydrolysat avant hydrogénation ayant été de 33.

Essai 6: Mise en oeuvre d'un hydrolysat d'amidon hydrogéné D de comosition:

| | |
|---|---|
| Produits de DP 1 | 2% |
| Produits de DP 2 | 5% |
| Produits de DP 3 | 7% |
| Produits de DP > 20 | 37%, |

le DE de cet hydrolysat avant hydrogénation ayant été de 21 environ.

Les bières obtenues ont été testées et classées du point de vue du moëlleux par rapport à la bière au sorbitol (essai 1) servant de témoin par un jury de dégustation.

Les bières des essais 2, 4, 5 et 6 ont été trouvées plus moëlleuses que la bière au sorbitol. Les hydrolysats d'amidon hydrogénés utilisés dans les essais 2, 5 et 6 sont jugés les plus performants, un léger avantage étant donné par cetains dégustateurs à la bière de l'essai n° 2.

L'hydrolysat utilisé dans l'essai n° 4 se classe entre celui de l'essai n° 5 et celui de l'essai n° 1.

La bière de l'essai n° 3 est considérée par la majorité des dégustateurs comme étant toujours au moins équivalente à la bière de l'essai témoin bien que la quantité de produit ajouté soit réduite d'un tiers, ce qui constitue un autre avantage en faveur des hydrolysats hydrogénés utilisés conformément à l'invention.

**Revendications**

1. Biére à teneur réduite en alcool, caractérisée par le fait qu'elle comporte une proportion de 0,1 à 2% en poids d'un hydrolysat d'amidon hydrogéné dont la composition sur matière sèche est la suivante:

- teneur en produits de DP 1 (degré de polymérisation) comprise entre 0,1 et 35%, de préférence entre 0,1 et 20%,

- teneur en produits de DP 2 comprise entre 0,1 et 45%, de préférence entre 0,1 et 42%,
- teneur en produits de DP > 20 inférieure à 45%, de préférence inférieure à 40% et, plus préférentiellement encore, inférieure à 30%, le complément à 100 étant constitué par les produits de DP 3 à 20.

2. Bière selon la revendication 1, caractérisée par le fait qu'elle comporte une proportion de 0,1 à 2% en poids d'un hydrolysat d'amidon hydrogéné dont la composition est la suivante:

```
0,5% < produits de DP 1      < 16%
1   % < produits de DP 2      < 35%
0   % ⩽ produits de DP > 20 < 20%.
```

3. Procédé de fabrication d'une bière à teneur réduite en alcool, caractérisé par le fait qu'à un moment quelconque de la fabrication de la bière et, de préférence, au plus tard au moment de l'opération de fermentation et avantageusement avant ou pendant le traitement de stérilisation du moût par ébullition en présence de houblon, on ajoute un hydrolysat d'amidon hydrogéné dont la composition est la suivante:

- teneur en produits de DP 1 (degré de polymésiation) comprise entre 0,1 et 35%, de préférence entre 0,1 et 20%,
- teneur en produits de DP 2 comprise entre 0,1 et 45%, de préférence entre 0,1 et 42%,
- teneur en produits de DP > 20 inférieure à 45%, de préférence inférieure à 40% et, plus préférentiellement encore, inférieure à 30%,
- le complément à 100 étant constitué par les produits de DP 3 à 20,

en une quantité telle que la bière finale en contienne une proportion de 0,1 à 2% en poids.

4. Procédé selon la revendication 3, caractérisé par le fait que l'hydrolysat est introduit sous la forme d'un sirop de 6 à 85% en poids de matières sèches ou sous la forme de poudre.

## Patentansprüche

1. Bier mit vermindertem Alkoholgehalt, dadurch gekennzeichnet, dass es einen Anteil von 0,1 bis 2 Gew.-% eines hydrierten Stärkehydrolysats enthält, dessen Zusammensetzung auf Trockenmaterialbasis die folgende ist:
- Gehalt an Produkten vom PG 1 (Polymerisationsgrad) zwischen 0,1 und 35%, vorzugsweise zwischen 0,1 und 20%,
- Gehalt an Produkten vom PG 2 zwischen 0,1 und 45%, vorzugsweise zwischen 0,1 und 42%,
- Gehalt an Produkten vom PG > 20 geringer als 45%, vorzugsweise geringer als 40% und insbesondere geringer als 30%,
wobei der Rest auf 100 aus Produkten vom PG 3 bis 20 besteht.

2. Bier gemäss Anspruch 1, dadurch gekennzeichnet, dass es einen Anteil von 0,1 bis 2 Gew.-% eines hydrierten Stärkehydrolysats umfasst, dessen Zusammensetzung die folgende ist:

```
0,5% < Produkte vom PG 1      < 16%
1   % < Produkte vom PG 2      < 35%
0   % ⩽ Produkte vom PG > 20 < 20%.
```

3. Verfahren zur Herstellung eines Bieres mit vermindertem Alkoholgehalt, dadurch gekennzeichnet, dass man zu einem beliebigen Zeitpunkt der Herstellung des Bieres und vorzugsweise spätestens zum Zeitpunkt des Fermentationsverfahrens und vorteilhaft vor oder während der Sterilisationsbehandlung der Würze durch Kochen in Anwesenheit von Hopfen ein hydriertes Stärkehydrolysat, das die folgende Zusammensetzung besitzt:
- Gehalt an Produkten vom PG 1 (Polymesiationsgrad) zwischen 0,1 und 35%, vorzugsweise zwischen 0,1 und 20%,
- Gehalt an Produkten vom PG 2 zwischen 0,1 und 45%, vorzugsweise zwischen 0,1 und 42%,
- Gehalt an Produkten vom PG > 20 geringer als 45%, vorzugsweise geringer als 40% und insbesondere geringer als 30%,
- wobei der Rest auf 100 aus Produkten vom PG 3 bis 20 besteht
in einer derartigen Menge zugibt, dass das fertiggestellte Bier hiervon einen Anteil von 0,1 bis 2 Gew.-% enthält.

4. Verfahren gemäss Anspruch 3, dadurch gekennzeichnet, dass das Hydrolysat in Form eines Sirups mit einem Gehalt von 6 bis 85 Gew.-% an Trockensubstanz oder in Form eines Pulvers eingebracht wird.

## Claims

1. Low alcohol-content beer, comprising a proportion of 0.1 to 2% by weight of a hydrogenated starch hydrolysate whose composition on dry matter is a follows:
- content of substances of DP 1 (degree of polyperisation) comprised between 0.1 and 35%, preferably between 0.1 and 20%,
- content of substances of DP 2 comprised between 0.1 and 45%, preferably between 0.1 and 42%,
- content of products of DP > 20 less than 45%, preferably less than 40% and, more preferably still, less than 30%,
- the complement to 100 being constituted by substances of DP 3 to 20.

2. Beer according to Claim 1, comprising a proportion of 0.1 to 2% by weight of a hydrogenated starch hydrolysate whose composition is a follows:

```
0.5% < substances of DP 1      < 16%
1   % < substances of DP 2      < 35%
0   % ⩽ substances of DP > 20 < 20%.
```

3. Process for manufacturing a low alcohol-content beer, wherein at any given moment in the manufacture of the beer and, preferably, at the latest at the moment of the fermentation operation and advantageously before or during the sterilization treatment of the wort by boiling in the presence of hops, a hydrogenated starch hydrolysate is added whose composition is a follows:

- content of substances of DP 1 (degree of polymerisation) comprised between 0.1 and 35%, preferably between 0.1 and 20%,
- content of substances of DP 2 comprised between 0.1 and 45%, preferably between 0.1 and 42%,
- content of products of DP > 20 less than 45%, preferably less than 40% and, more preferably still, less than 30%,

- the complement to 100 being constituted by substances of DP 3 to 20,

in an amount such that the final beer contains thereof a proportion of 0.1 to 2% by weight.

4. Process according to Claim 3, wherein the hydrolysate is introduced in the form of a syrup of 6 to 85% by weight of dry matter or in the form of powder.